(19) Europäisches Patentamt
European Patent Office
Office européen des brevets

(11) Numéro de publication : **0 053 987**
**B1**

# (12) FASCICULE DE BREVET EUROPÉEN

(45) Date de publication du fascicule du brevet : **21.11.85**

(51) Int. Cl.[4] : **C 07 F 17/02**

(21) Numéro de dépôt : **81401958.4**

(22) Date de dépôt : **09.12.81**

## (54) Procédé de synthèse de diphospha-1,1'-ferrocène.

(30) Priorité : **10.12.80 FR 8026168**

(43) Date de publication de la demande : **16.06.82 Bulletin 82/24**

(45) Mention de la délivrance du brevet : **21.11.85 Bulletin 85/47**

(84) Etats contractants désignés : **AT BE CH DE FR GB IT LI LU NL SE**

(56) Documents cités :
**JOURNAL OF ORGANOMETALLIC CHEMISTRY, volume 156, no. 2, 22 août 1978 ELSEVIER (NL) G. DE LAUZON et al. "Synthèse des diphospha-1, 1'-ferrocènes" pages C33-36**
**JOURNAL OF THE AMERICAN CHEMICAL SOCIETY, volume 102, no. 3, 30 janvier 1980 (US) G. DE LAUZON et al. "1,1'-diphosphaferrocènes. Synthesis, basic chemistry and structure ", pages 994-1 000**
**Chimica Organica (Zanichelli), The Vocabulary of Organic Chemistry**

(73) Titulaire : **SOCIETE NATIONALE DES POUDRES ET EXPLOSIFS**
**12, quai Henri IV**
**F-75181 Paris Cedex 04 (FR)**

(72) Inventeur : **de Lauzon, Guillaume**
**26 rue de Stael**
**F-75015 Paris (FR)**
Inventeur : **Mathey, François**
**10 bis quai Henri IV**
**F-75004 Paris (FR)**

**EP 0 053 987 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention se rapporte au domaine de la fabrication des homologues phosphorés des dérivés ferrocéniques et plus particulièrement des diphospha-1,1′ ferrocènes.

Les diphospha-1,1′-ferrocènes sont des composés connus pour leur grande stabilité. De Lauzon, Mathey et Simalty ont décrit dans Journal of Organometallic Chemistry, 156 (1978) C 33-C 36, un procédé de synthèse de ces composés consistant à faire réagir un phospholyllithium sur du chlorure ferreux anhydre selon l'équation :

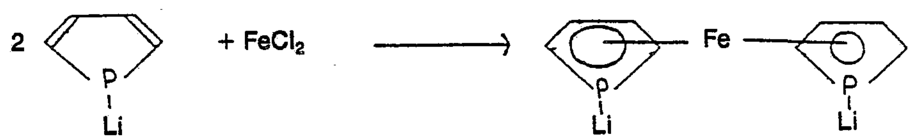


Le rendement de ce procédé n'est toutefois pas satisfaisant puisque de l'ordre de 15 % seulement, la nature du schéma de substitution du noyau phospholyl important peu.

Plus récemment, de Lauzon et coll. ont décrit un autre moyen d'accès à ces composés dans Journal of American Chemical Society, *102,* 994 (1980), consistant à échanger le sodium du dihydrocarbyl-3,4 phospholyl sodium pour du magnésium puis à faire réagir le magnésien obtenu sur le chlorure ferreux anhydre. Le rendement de ce procédé est nettement amélioré par rapport au précédent puisque de l'ordre de 50 %, mais il est atteint au prix d'une délicate séparation du produit final d'avec le milieu réactionnel.

Il existe donc un besoin pressant d'un procédé permettant d'obtenir les diphospha-1,1′ ferrocènes avec un bon rendement et sans difficultés d'isolation. C'est ce besoin que se propose de satisfaire la présente invention.

L'invention consiste en un procédé de synthèse de diphospha-1,1′ ferrocènes de formule générale :

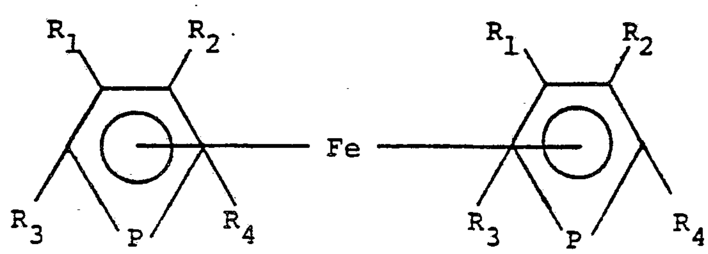

où $R_1$, $R_2$, $R_3$, $R_4$ sont des groupes alkyle de $C_1$ à $C_6$, des groupes aryles de $C_6$ à $C_{12}$, des groupes alkaryle de $C_7$ à $C_{12}$, des groupes aralkyle de $C_7$ à $C_{12}$ ou bien un atome d'hydrogène, les $R_1$, $R_2$, $R_3$, $R_4$ pouvant être identiques, par action du chlorure ferreux anhydre sur un mélange de phospholyl alcalin substitué et de phényl-alcalin, caractérisé en ce qu'avant de faire agir le chlorure ferreux sur le mélange, on traite ce dernier avec un acide de Lewis.

Une grande variété d'acides de Lewis a conduit, par rapport aux procédés antérieurs, à une substantielle amélioration du rendement. Les sels métalliques accepteurs d'un doublet d'électrons sont préférés et, parmi ceux-là, on préfère encore plus particulièrement : les halogénures des métaux de la colonne 2b notamment $ZnCl_2$ et $ZnI_2$, les halogénures des métaux de la colonne 3b, notamment $BF_3$-$Et_2O$ et $AlCl_3$, les halogénures des métaux de la colonne 4b, notamment $SnCl_4$, les halogénures des métaux de la colonne 4a, notamment $TiCl_4$ et $ZrCl_4$, les halogénures des métaux de la colonne 5b, notamment $SbF_3$ et $SbCl_3$, et les halogénures des métaux de la colonne 5a, notamment $TaCl_5$ et $NbCl_5$.

On peut utiliser soit un seul acide de Lewis, ce qui est préférable, soit un mélange d'acides de Lewis. La quantité d'acide de Lewis à utiliser est comprise entre une et trois fois la quantité stœchiométrique pour la neutralisation du phényl-alcalin. Le rendement de la réaction est sensible à la proportion d'acide de Lewis par rapport au phényl-alcalin. Il est rappelé que, comme cela est décrit dans les publications précitées, le mélange de phényl-alcalin et phospholyl-alcalin utilisé comme matière de départ dans la présente réaction est équimoléculaire par essence, puisque préparé selon la réaction :

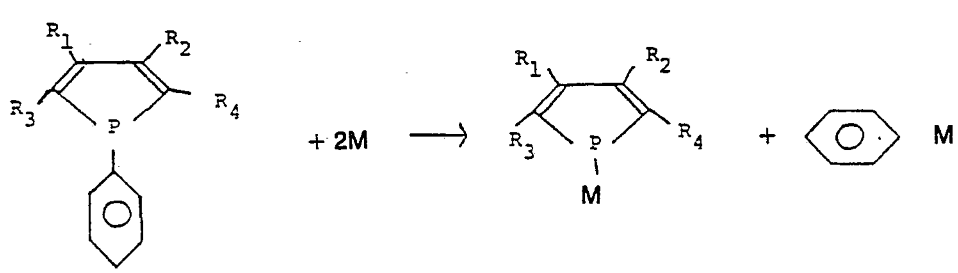

où $R_1$, $R_2$, $R_3$, $R_4$ ont les significations précitées et où M est un métal alcalin choisi dans le groupe formé par le lithium, le sodium et le potassium, ce métal alcalin pouvant se présenter sous une forme solubilisée commune tel qu'un anion-radical comme le naphtalène-sodium.

On a constaté qu'en appliquant le procédé selon l'invention en faisant varier la proportion d'acide de Lewis, on observait au moins un maximum de rendement correspondant à l'utilisation de la quantité d'acide nécessaire à la neutralisation du phényl-alcalin,

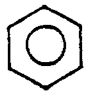 M.

Par exemple, si on représente par AXn un acide de Lewis préféré selon l'invention, c'est-à-dire un halogénure ($X^-$) d'un métal (A) n valent appartenant à l'une des colonnes précitées, on observe un maximum de rendement pour l'utilisation de l/n mole d'un tel acide de Lewis, par mole de phényl-alcalin.

Le fait que l'acide de Lewis neutralise d'abord le phényl-alcalin a été vérifié par RMN$^{31}$P sur un cas précis : l'addition d'un tiers de mole d'$AlCl_3$ à un mélange molaire de diméthyl-3,4 phospholyl lithium et de phényl lithium dans le THF ne perturbe pas le signal phosphore dû au phospholyl lithium ($^{31}P = + 56$ ppm) et ne fait apparaître aucun autre signal, correspondant à une nouvelle espèce phosphorée.

Généralement, quoique non systématiquement, on observe un second maximum de rendement correspondant au double de la quantité d'acide de Lewis nécessaire à la neutralisation du phényl-alcalin, soit 2/n mole d'$AX_n$ par mole de phényl-alcalin de préférence. L'homme de l'art peut facilement déterminer lui-même selon les mélanges de départ et le type de l'acide de Lewis, la proportion d'acide de Lewis conduisant aux meilleurs rendements et choisir par exemple d'employer, soit l/n, soit 2/n moles d'$AX_n$ par mole de phényl-alcalin.

Conformément à l'invention, la réaction est effectuée, dans un milieu solvant comprenant un éther basique, inerte et aprotique. De préférence le milieu solvant n'est composé que d'un tel solvant. Le tétrahydrofuranne (THF) est un solvant convenant bien mais on peut utiliser aussi un mélange à 10 % de THF dans un hydrocarbure tel que l'hexane ou le benzène. Les glymes et diglymes sont également satisfaisants.

Certaines impuretés pouvant inhiber la réaction ou détruire les réactifs, il est souhaitable et suffisant d'opérer en l'absence d'humidité et sous atmosphère inerte. La réaction proprement dite peut être effectuée entre − 80° et + 50 °C, de préférence entre − 20 °C et + 20 °C.

Grâce au procédé selon l'invention, il est désormais possible d'atteindre des rendements élevés en diphosphaferrocènes, souvent supérieurs à 50 % et quelquefois égaux à 70 %, sans que se posent de délicats problèmes au moment de l'isolation du produit final.

Par ailleurs, l'invention permet également d'élargir l'éventail des diphosphaferrocènes synthétisables. Ainsi, on a pu obtenir grâce au procédé selon l'invention, les produits de formule générale (1) dans lesquels $R_1 = R_2 = R_3 = R_4 = H$ et où $R_1 = CH_3$ et $R_2$, $R_3$, $R_4 = H$.

D'une manière générale le procédé selon l'invention donne de meilleurs résultats avec les produits où $R_3 = R_4 = H$ et où l'un au moins des $R_1$ et $R_2$ est un groupe hydrocarbyle. L'introduction de substituants sur les positions X ($R_3$, $R_4$) ne pose toutefois aucun problème puisqu'il est possible de les introduire par substitution électrophile après création de l'édifice diphosphaferrocénique, d'après le Journal of American Chemical Society, 102, 994 (1980), op. cit.

Enfin, on doit remarquer que les acides de Lewis utilisés ont un effet stabilisant sur les diphospha-1,1'-ferrocènes ce qui, joint à la neutralisation sélective du phényl-alcalin dans le milieu réactionnel, permet d'obtenir les substantielles améliorations de rendement constatées dans le cadre de l'invention. On peut envisager de faire, du fait de l'invention, un plus large usage des diphosphaferrocènes, qui sont notamment utiles comme photostabilisateurs pour les polymères.

L'invention concerne enfin, en tant que produit nouveau, le diméthyl-3,3'-diphospha-1,1'-ferrocène.

L'intérêt du procédé selon l'invention ainsi que la généralité de son application seront mieux appréciés encore à l'aide des exemples non limitatifs suivants :

Exemple 1 : Synthèse de tétraméthyl-3,3',4,4'-diphospha-1,1'-ferrocène.

On a dissout 3 ml (3,15 g/16,7 mmole) de diméthyl-3,4-phényl 1 phosphole dans 50 ml de THF. On a ajouté à cette solution 353 mg de lithium et on a agité pendant 4 heures en maintenant la température à 20 °C. On a filtré le mélange réactionnel et récupéré 133 mg de lithium soit un rendement de 94 % pour cette étape préparatoire. Au mélange équimoléculaire de phényl-lithium et de diméthyl-3,4-phospholyllithium ainsi obtenu et préalablement ramené à 0 °C, on a ajouté 0,75 g (5,6 mmole) de chlorure d'aluminium. Le nouveau mélange a été agité pendant 30 mn à 0 °C puis pendant 30 minutes à 20 °C. Au mélange obtenu, on a ajouté 1,1 g (8,6 mmole) de chlorure ferreux après quoi on a agité le milieu pendant 12 heures à 20 °C. Après hydrolyse à l'aide de 50 ml d'HCl 2N, on a versé le mélange dans 200 ml d'hexane. La phase aqueuse a été décantée et la phase organique a été lavée à l'eau puis séchée sur sulfate de sodium. On a chassé les solvants au rotavapor.

Le résidu a été repris à l'hexane et filtré sur un lit de gel de silice. Le filtrat a été évaporé à sec et séché sous vide mécanique.

On a obtenu 1,74 g (6,25 mmole) de tétraméthyl-3,3',4,4'-diphospha-1,1' ferrocène, soit un rendement de 74 % par rapport au phosphole mis en jeu.

Exemples 2 à 9

Le processus de l'exemple 1 a été intégralement repris sauf pour ce qui concerne la nature et/ou la quantité de l'acide de Lewis. Les résultats obtenus sont fournis dans le tableau suivant qui fait figurer l'acide de Lewis utilisé, la quantité utilisée en cet acide, la masse de produit obtenue et le rendement qui en découle.

| Exemple | Acide de Lewis | Quantité en g (mmole) | Masse de produit obtenue en g (mmole) | Rendement en % |
|---|---|---|---|---|
| 2 | $AlCl_3$ | 1,85 (13,8) | 1,36 (4,9) | 59 |
| 3 | $ZnCl_2$ | 1,13 (8,35 | 1,42 (5,1) | 61 |
| 4 | $ZnCl_2$ | 3,4 (25) | 1,46 (5,25) | 62 |
| 5 | $ZnI_2$ | (a) | 1,40 (5,0) | 61 |
| 6 | $SbF_3$ | 1,0 (4,1) | 1,20 (4,3) | 51 |
| 7 | $SnCl_4$ | 1,08 (4,1) | 1,12 (4,0) | 48 |
| 8 | $BF_3$-$Et_2O$ | 0,78 (5,5) | 1,00 (3,6) | 43 |
| 9 | $TiCl_4$ | 0,79 (4,2) | 0,75 (2,7) | 32 |

(a) préparé à partir de 6,4 g d'iode (25 mmoles) et de zinc en excès (éliminé par filtration).

Exemple 10

On a appliqué le processus de l'exemple 1 à la synthèse du diméthyl-3,3'-diphospha-1,1' ferrocène, la seule différence résidant dans l'adoption d'une température de 0 °C durant la réaction avec $FeCl_2$.

On a utilisé 3,21 g (18,4 mmole) de méthyl-3 phényl-1 phosphole, 70 ml de THF, un excès de lithium, 0,82 g (6,1 mmole) d'$AlCl_3$ et 1,17 g (0,2 mmole) de $FeCl_2$.

On a isolé 1,0 g (4 mmole) de diméthyl-3,3'-diphospha-1,1' ferrocène, soit un rendement de 43 %.

Ce produit, qui est nouveau, a été caractérisé par ses spectres RMN et de masse.

Spectre RMN$^1$ H (C D $Cl_3$)

δ = 2,15 (s, 6H, Me)

δ = 3,68 (d, $^2J$(H – P) 36 Hz, 2H, $HC_2$)

δ = 3,70 (d × m, $^2J$ (H – P) 38 Hz, 2H, $HC_5$)

δ = 5,05 (m, 2H, $HC_4$)

(les δ sont exprimés en ppm).

Spectre RMN$^{31}$P ($CDCl_3$) acide phosphonique externe, (δ + à champ faible) : On a observé un multiplet centre à – 61,5 ppm.

Spectre de masse (70 eV, 120 °C)

m/e = 250 (M, 100 %)

m/e = 235 (M moins $CH_3$, 2,5 %)

m/e = 186 (2 %)

m/e = 153 (M moins 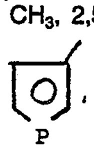, 11 %)

m/e = 152 (12 %)

m/e = 139 (5 %)

m/e = 125 ($M^{++}$, 2 %)

m/e = 108 (2 %)

m/e = 97 ( 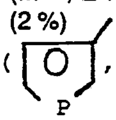, 4 %)

m/e = 56 (Fe, 4 %).

**Revendications**

1. Procédé de synthèse de diphospha-1,1'-ferrocènes de formule générale :

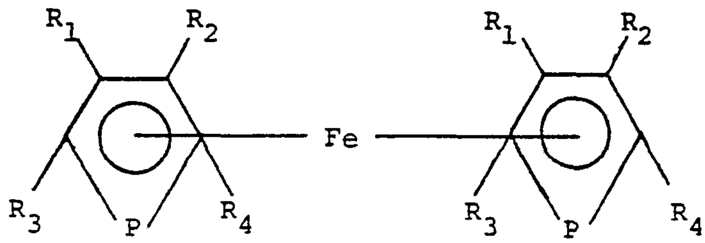

où $R_1$, $R_2$, $R_3$, $R_4$ sont des groupes alkyle de $C_1$ à $C_6$, des groupes aryles de $C_6$ à $C_{12}$, des groupes alkaryle de $C_7$ à $C_{12}$, des groupes aralkyle de $C_7$ à $C_{12}$ ou bien un atome d'hydrogène, les $R_1$, $R_2$, $R_3$, $R_4$ pouvant être identiques, par action du chlorure ferreux anhydre sur un mélange de phospholyl alcalin substitué et de phényl-alcalin, caractérisé en ce qu'avant de faire agir le chlorure ferreux sur le mélange, on traite ce dernier avec un acide de Lewis choisi dans le groupe constitué par les halogénures des métaux de la colonne 2b, les halogénures des métaux de la colonne 3b, les halogénures des métaux de la colonne 4a, les halogénures des métaux de la colonne 4b, les halogénures des métaux de la colonne 5a, et les halogénures de la colonne 5b.

2. Procédé de synthèse selon la revendication 1, caractérisé en ce que l'acide de Lewis est choisi dans le groupe constitué par $ZnCl$, $ZnI_2$, $BF_3Et_2O$, $AlCl_3$, $SnCl_4$, $TiCl_4$, $ZrCl_4$, $SbF_3$, $SbCl_3$, $TaCl_5$ et $NbCl_5$.

3. Procédé de synthèse selon les revendications 1 ou 2, caractérisé en ce qu'on utilise une quantité d'acide de Lewis comprise entre une et trois fois la quantité stœchiométrique pour la neutralisation du phényl-alcalin.

4. Procédé de synthèse selon la revendication 3 caractérisé en ce que l'on utilise une quantité d'acide de Lewis équivalente à la quantité stœchiométrique pour la neutralisation du phényl-alcalin.

5. Procédé de synthèse selon l'une quelconque des revendications 1 à 4, caractérisé en ce qu'on effectue la réaction dans un milieu solvant comprenant un éther basique, inerte et aprotique.

6. Procédé de synthèse selon la revendication 5, caractérisé en ce que l'éther basique inerte et aprotique est le THF.

7. Procédé de synthèse selon l'une quelconque des revendications précédentes, caractérisé en ce que la réaction est effectuée entre − 80 et 50 °C, de préférence entre − 20 et + 20 °C.

**Claims**

1. Process of synthesis of 1,1'-diphosphaferrocenes of the general formula :

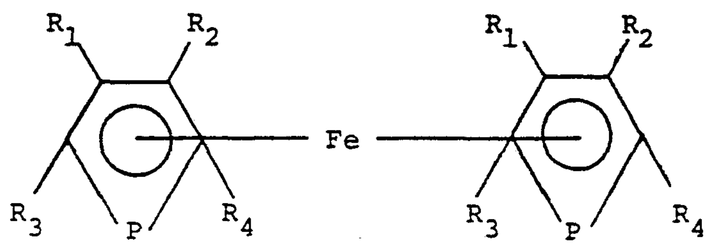

in which $R_1$, $R_2$, $R_3$ and $R_4$ are $C_1$ to $C_6$ alkyl groups, $C_6$ to $C_{12}$ aryl groups, $C_7$ to $C_{12}$ alkaryl groups, $C_7$ to $C_{12}$ aralkyl groups or a hydrogen atom, it being possible for $R_1$, $R_2$, $R_3$ and $R_4$ to be identical, by reacting anhydrous ferrous chloride with a mixture of a substituted alkali metal phospholyl and an alkali metal phenyl, characterised in that, before reacting the ferrous chloride with the mixture, the latter is treated with a Lewis acid chosen from the group comprising the halides of metals of column 2b, the halides of the metals of column 3b, the halides of the metals of column 4a, the halides of the metals of column 4b, the halides of the metals of column 5a and the halides of the metals of column 5b.

2. Process of synthesis according to Claim 1, characterised in that the Lewis acid is chosen from the group comprising $ZnCl_2$, $ZnI_2$, $BF_3Et_2O$, $AlCl_3$, $SnCl_4$, $TiCl_4$, $ZrCl_4$, $SbF_3$, $SbCl_3$, $TaCl_5$ and $NbCl_5$.

3. Process of synthesis according to Claim 1 or 2, characterised in that an amount of Lewis acid of between one and three times the stoechiometric amount for neutralisation of the alkali metal phenyl is used.

4. Process of synthesis according to Claim 3, characterised in that an amount of Lewis acid equivalent to the stoechiometric amount for neutralisation of the alkali metal phenyl is used.

5. Process of synthesis according to any one of Claims 1 to 4, characterised in that the reaction is carried out in a solvent medium comprising a basic, inert and aprotic ether.

6. Process of synthesis according to Claim 5, characterised in that the basic, inert and aprotic ether is THF.

7. Process of synthesis according to any one of the preceding claims, characterised in that the reaction is carried out at between − 80 and + 50 °C and preferably between − 20 and + 20 °C.

**Patentansprüche**

1. Verfahren zur Herstellung von 1,1'-Diphosphaferrocenen der allgemeinen Formel

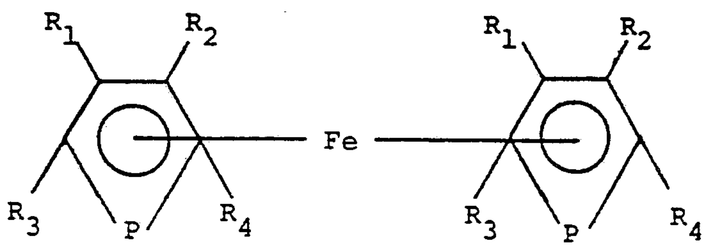

in der $R_1$, $R_2$, $R_3$, $R_4$ $C_{1-6}$-Alkylgruppen, $C_{6-12}$-Arylgruppen, $C_{7-12}$-Alkylarylgruppen, $C_{7-12}$-Arylalkylgruppen oder ein Wasserstoffatom sind, wobei $R_1$, $R_2$, $R_3$, $R_4$ gleich sein können, durch Einwirkung von wasserfreiem Eisen (II)-chlorid auf ein Gemisch von substituierten Alkalimetallphospholyl- und Alkalimetallphenylverbindungen, dadurch gekennzeichnet, daß das Gemisch vor Einwirkung des Eisen(II)-chlorids mit einer Lewis-Säure aus der aus Metallhalogeniden der Gruppe 2b, 3b, 4a, 4b, 5a und 5b bestehenden Gruppe behandelt wird.

2. Verfahren nach Anspruch 1, dadurch gekennzeichnet, daß die Lewis-Säure aus der aus $ZnCl_2$, $ZnI_2$, $BF_3Et_2O$, $AlCl_3$, $SnCl_4$, $TiCl_4$, $ZrCl_4$, $SbF_3$, $SbCl_3$, $TaCl_5$ und $NbCl_5$ bestehenden Gruppe ausgewählt wird.

3. Verfahren nach Anspruch 1 oder 2, dadurch gekennzeichnet, daß die Lewis-Säure in einer Menge verwendet wird, die der 1 bis 3fachen, für die Neutralisation der Alkalimetallphenylverbindung notwendigen stöchiometrischen Menge entspricht.

4. Verfahren nach Anspruch 3, dadurch gekennzeichnet, daß die Lewis-Säure in einer Menge verwendet wird, die der für die Neutralisation des Alkalimetallphenylverbindung stöchiometrischen Menge entspricht.

5. Verfahren nach einem der Ansprüche 1 bis 4, dadurch gekennzeichnet, daß die Reaktion in einem Lösungsmittel aus einem basischen, inerten und aprotischen Ether durchgeführt wird.

6. Verfahren nach Anspruch 5, dadurch gekennzeichnet, daß als inerter, aprotischer, basischer Ether Tetrahydrofuran verwendet wird.

7. Verfahren nach einem der vorstehenden Ansprüche, dadurch gekennzeichnet, daß die Reaktion zwischen − 80 und 50 °C und vorzugsweise zwischen − 20 und + 20 °C durchgeführt wird.